# EUROPÄISCHE PATENTANMELDUNG

(11) **EP 4 700 507 A1**
(43) Veröffentlichungstag der Anmeldung: **25.02.2026**
(21) Anmeldenummer: 25188932.5
(22) Anmeldetag: 11.07.2025
(51) Int. Cl.: G05B 19/401, G05B 19/404, G05B 19/4065, G06N 3/02

(54) **VERFAHREN ZUM ÜBERWACHEN DES ZUSTANDS EINER HARTFEINBEARBEITUNGSMASCHINE, INSBESONDERE EINER SCHLEIFMASCHINE**

(30) Priorität: 19.08.2024 DE 102024123554
(71) Anmelder: Kapp Niles GmbH & Co. KG, 96450 Coburg (DE)
(72) Erfinder: SENFTLEBEN, Jan, 96450 Coburg (DE); GÖBEL, Christopher, 96482 Ahorn (DE); RITZ, Johannes, 96242 Sonnefeld (DE)
(74) Vertreter: Gosdin, Carstensen & Partner Patentanwälte Partnerschaftgesellschaft mbB

(57) **Zusammenfassung**

Die Erfindung betrifft ein Verfahren zum Überwachen des Zustands einer Hartfeinbearbeitungsmaschine, insbesondere einer Schleifmaschine, wobei die Hartfeinbearbeitungsmaschine eine Anzahl an NC-gesteuerten Achsen aufweist, die bei der Bearbeitung eines Werkstücks betätigt werden, wobei für die Beurteilung des Zustands der Hartfeinbearbeitungsmaschine mindestens eine Referenzfahrt an mindestens einer Achse durchgeführt wird, bei der eine Reaktion der Achse auf ein Antriebssignal gemessen und bewertet wird. Um eine verbesserte Zustandsüberwachung der Hartfeinbearbeitungsmaschine zu ermöglichen, sieht die Erfindung vor, dass die Referenzfahrt eine Phase umfasst, in der die Achse beschleunigt und/oder abgebremst wird, wobei zur Beurteilung des Verschleißzustands der Hartfeinbearbeitungsmaschine die Reaktion der Achse auf das Antriebssignal gemessen und die gemessene Reaktion mit erwarteten Signalverläufen verglichen wird, die bei ordnungsgemäßem Zustand der Achse vorlagen, wobei aus dem Vergleich eine Aussage abgeleitet wird, ob ein ordnungsgemäßer Zustand der Achse vorliegt.

## Beschreibung

Die Erfindung betrifft ein Verfahren zum Überwachen des Zustands einer Hartfeinbearbeitungsmaschine, insbesondere einer Schleifmaschine, wobei die Hartfeinbearbeitungsmaschine eine Anzahl an NC-gesteuerten Achsen aufweist, die bei der Bearbeitung eines Werkstücks betätigt werden, wobei für die Beurteilung des Zustands der Hartfeinbearbeitungsmaschine mindestens eine Referenzfahrt an mindestens einer Achse durchgeführt wird, bei der die Reaktion der Achse auf ein Antriebssignal gemessen und bewertet wird.

Aus der EP 4 130 902 A1 ist es bekannt, bei der Inbetriebnahme einer Fertigungsmaschine mit lagegeregelten Achsen ein Verfahren einzusetzen, bei dem von einer Steuereinrichtung als Randbedingungen für eine Identifikationsfahrt ein maximaler Verfahrbereich, eine maximale Verfahrgeschwindigkeit für die Achse sowie eine maximale Antriebsleistung hinterlegt werden. Mit diesen Parametern wird die Identifikationsfahrt durchgeführt, bei der die maßgeblichen Parameter überwacht werden. Die Identifikation erfolgt anhand eines Modells, in welches die Parameter eingehen.

Die EP 3 176 657 A1 offenbart ein Verfahren zum Bestimmen der Steifigkeit eines Antriebsstrangs zur linearen Bewegung einer Maschinenkomponente entlang einer Linearführung einer Werkzeugmaschine. Dabei wird eine konstante Beschleunigung für die Maschinenkomponente vorgegeben und eine Differenz zwischen einer vorgegebenen und gemessenen Position der Maschinenkomponente bestimmt.

Aus der WO 2023/061851 A1 geht ein Verfahren zur Überwachung des Zustands einer Werkzeugmaschine hervor, mit dem die Entwicklung störender Geräusche in einem Getriebe vorhergesagt werden kann, wobei das Getriebe ein mit der Maschine bearbeitetes Werkstück enthält. Im Rahmen dieses Verfahrens werden aus Maschinenmessdaten durch spektrale Analyse Maschinenspektraldaten berechnet, um festzustellen, bei welchen Frequenzen oder Ordnungen periodische Anregungen von Maschinenkomponenten auftreten, während eine Maschinenachse betätigt wird.

Die DE 10 2023 101 527 A1 offenbart ein Verfahren zur Zustandsüberwachung eines elektrischen Antriebsystems, bei dem Prozessdaten und Antriebsdaten unter Verwendung eines identifizierenden Merkmals aufgezeichnet werden. Hieraus soll eine bessere Erkennung interessierender Betriebszustände ermöglicht werden.

Eine Hartfeinbearbeitungsmaschine, insbesondere eine Verzahnungs- oder Profilschleifmaschine, unterliegt aufgrund des Betriebs dem Verschleiß, so dass zu gegebener Zeit eine Maschinenwartung durchgeführt und gegebenenfalls Maschinenkomponenten ersetzt werden müssen. Dasselbe gilt beispielsweise im Falle eines unerwarteten Ereignisses (z. B. Crash, Überlast). Dabei ist zu vermeiden, dass die Produktion von Werkstücken erfolgt, während die Maschine bereits verschleiß- bzw. schadensbedingt nicht mehr in ordnungsgemäßem Zustand ist.

Daher ist es in der Praxis üblich, zur Prüfung des Status der Maschine und insbesondere zu Beurteilung von Verschleiß periodisch Referenzfahrten der Maschine durchzuführen, bei denen die Maschinenachsen (Linearachsen/ Rotationsachsen) außerhalb des eigentlichen Betriebs der Maschine verfahren werden und die Reaktion auf vorgegebene Steuerungssignale erfasst wird. Damit kann geprüft werden, ob die beteiligten Maschinenkomponenten noch in einwandfreiem Zustand sind oder ob verschleißbedingt oder auch aufgrund eines unerwarteten Ereignisses (z. B. Crash) bereits Veränderungen in der Reaktion auf vorgegebene Steuerungssignale festgestellt werden. In letzterem Falle steht dann eine entsprechende Maschinenwartung an.

Die zyklischen durchgeführten Referenzfahrten liefern dabei ein sehr genaues Bild über den Maschinenzustand. Es entstehen genaue Resultate, da bei den Referenzfahrten vordefinierte Verfahrbewegungen mit ähnlichen Rahmenbedingungen gefahren werden können und somit störende Einflussgrößen nur sehr geringe Auswirkungen auf das System haben.

Nachteilig ist dabei allerdings, dass es von der gewählten Periode abhängt, in der besagte Referenzfahrten durchgeführt werden, wie zeitlich engmaschig Veränderungen an der Maschine ermittelt werden können. In der Praxis ist man bestrebt, Referenzfahrten aufgrund der hierfür benötigten Zeiten nicht zu häufig durchzuführen (da während derselben keine Bearbeitung von Werkstücken stattfinden kann), was dann allerdings zu relativ langen Phasen führt, in denen die Maschine nicht geprüft wird (lange Zeiträume zwischen den Referenzfahrten). Länger andauernde Referenzfahrten können darüber hinaus gegebenenfalls zu Problemen im Temperaturgang der Maschine führen.

Der Erfindung liegt die **Aufgabe** zugrunde, ein Verfahren der eingangs genannten Art so fortzubilden, dass eine verbesserte Zustandsüberwachung der Hartfeinbearbeitungsmaschine und namentlich deren Maschinenkomponenten, insbesondere der Linear- und Rotationsachsen, möglich ist. Dabei soll möglichst ohne Verlust an Maschinenkapazität eine engmaschige Maschinenüberwachung möglich sein. Des Weiteren wird angestrebt, mögliche Fehlerursachen für den Verschleiß genauer zu detektieren.

Die **Lösung** dieser Aufgabe durch die Erfindung ist dadurch gekennzeichnet, dass die Referenzfahrt eine Phase umfasst, in der die Achse beschleunigt und/oder abgebremst wird, wobei zur Beurteilung des Verschleißzustands der Hartfeinbearbeitungsmaschine die Reaktion der Achse auf das Antriebssignal gemessen und die gemessene Reaktion mit erwarteten Signalverläufen verglichen wird, die bei ordnungsgemäßem Zustand der Achse vorlagen, wobei aus dem Vergleich eine Aussage abgeleitet wird, ob ein ordnungsgemäßer Zustand der Achse vorliegt.

Die genannten vorher bestimmten Reaktionen sind also solche, die bei ordnungsgemäßem Zustand der Achse vorlagen (bzw. bei ordnungsgemäßem Zustand der Achse ermittelt wurden). Dabei können auch Kombinationen von mehreren Reaktionen berücksichtigt werden, welche aus einem ordnungsgemäßen Zustand hervorgehen. Derartige Reaktionen können auch von anderen Maschinen stammen und dort erfasst worden sein.

Der genannte Vergleich erfolgt bevorzugt unter Nutzung eines Machine-Learning-Konzepts oder eines Deep-Learning-Konzepts. Das Machine-Learning bzw. das Deep-Learning erfolgt bevorzugt unter Verwendung mindestens eines Autoencoders.

Die gemessene und bewertete Reaktion der Achse auf das Antriebssignal kann beispielsweise und bevorzugt eine Regeldifferenz der NC-Achse sein, die bei der Regelung der Maschinenachse auftritt, oder kann eine Beschleunigung/Schwingung sein, die ein Beschleunigungsaufnehmer erfasst, und/oder kann ein Strom sein, mit dem eine Maschinenachse angetrieben wird. Dabei können auch weitere Signale in Betracht kommen, die eine signifikante Aussagekraft über den Beschleunigungs- bzw. Abbremsvorgang haben, wobei derartige Signale alternativ oder additiv berücksichtigt werden können.

Die Referenzfahrt erfolgt bevorzugt dann, wenn kein Eingriff des Werkzeugs der Hartfeinbearbeitungsmaschine mit dem Werkstück vorliegt.

Die Referenzfahrt kann neben mindestens einer Beschleunigungsphase und/oder Abbremsphase auch eine Phase konstanter Geschwindigkeit der Achse umfassen.

Die Referenzfahrt kann auch als Prüffahrt durchgeführt werden, die im Zeitraum einer Bearbeitungsphase des Werkstücks erfolgt, die mit der Einbringung des Werkstücks in die Hartfeinbearbeitungsmaschine beginnt und mit der Abfuhr des bearbeiteten Werkstücks aus der Hartfeinbearbeitungsmaschine endet. In diesem Falle kann vorgesehen werden, dass die Prüffahrt erfolgt, wenn kein Eingriff des Werkzeugs der Hartfeinbearbeitungsmaschine mit dem Werkstück vorliegt.

Die Prüffahrt findet bevorzugt während eines Leerhubs statt, in der das Werkzeug relativ zum Werkstück verfahren wird, ohne dass es zum Eingriff des Werkzeugs in das Werkstück kommt.

Mit Blick auf den oben genannten Vergleich der gemessenen Reaktion der Achse auf das Antriebssignal mit vorher bestimmten Reaktionen sieht eine bevorzugte Ausgestaltung der Erfindung vor, dass im Rahmen dessen beurteilt wird, ob das Verlassen eines zulässigen Toleranzbandes zu erwarten ist. Insofern wird also eine Trendanalyse durchgeführt, bei der früher erfasste Werte mit einbezogen werden, um zu erkennen, ob die Maschinenachse im Begriff ist, einen zulässigen Betriebsbereich zu verlassen. Auch hierfür eignen sich Methoden der Künstlichen Intelligenz sehr gut, um dies automatisch durchzuführen.

Das Verfahren wird bevorzugt bei einer Verzahnungsschleifmaschine eingesetzt.

Somit erfolgt eine effiziente Bewertung des Verschleißzustands der Maschine durch die Bewertung von Signalverläufen, die ermittelt werden, wenn eine Achse zumindest eine Beschleunigungsphase bzw. zumindest eine Abbremsphase durchläuft. Die besagten Beschleunigungsphasen bzw. Abbremsphasen werden während einer Referenzfahrt oder durch Leerhübe beim Betrieb der Maschine gefahren. Zur Bewertung der aufgenommenen Signale werden bevorzugt an sich bekannte Methoden der Künstlichen Intelligenz und insbesondere das Machine-Learning bzw. das Deep-Learning eingesetzt.

Durch das vorgeschlagene Vorgehen können ein Fehlerfall der Maschine bzw. der aktuelle Verschleißzustand der Maschine verbessert erkannt werden.

Zusätzlich zur bekannten Bewertung der Konstantfahrt aus einer Referenzfahrt werden erfindungsgemäß also mindestens eine Beschleunigungs- und/oder eine Abbremsphase (aus einer Referenzfahrt und/oder aus Leerhüben während des Prozesses) in die Bewertung integriert. Diese Phasen der Beschleunigung bzw. der Abbremsung bilden Nichtlinearitäten in wesentlich besserer Weise als Konstantfahrten ab, wie sie beispielsweise bei Losen oder Spiel auftreten. Sich anbahnender Verschleiß lässt sich hierdurch schneller bzw. früher erkennen. Insbesondere dienen die Beschleunigung aus dem Stillstand heraus oder das Abbremsen in den Stillstand bei Linearachsen der richtigen Erkennung solcher Fehler (Nichtlinearitäten).

Weiterhin ergibt sich der Vorteil, dass durch die komplettere Bewertung der Referenzfahrt das Gesamtsystem bestehend aus einzelnen mechanischen Komponenten der Achse, Reglereinstellungen, Antrieben usw. gesamtheitlich beurteilt werden kann. Unter anderem können Stromspitzen, Schwergängigkeiten und Schmierungszustände durch die Beschleunigungsphasen verbessert detektiert werden.

Dies spielt besonders bei Bauteilen mit Verzahnungen für die Elektromobilität in Folge erhöhter qualitativer Anforderungen bzw. enger Werkstücktoleranzen eine wichtige Rolle.

Zur Bewertung der nichtlinearen Phasen sind statistische bzw. kennwertbezogene Ansätze nicht optimal. Aufgrund der Komplexität der Problemstellung sind die gesamten Signalverläufe und/oder die Kombinationen von Signalverläufen für die Bewertung vorteilhaft. Für die Bewertung eignen sich vielmehr besonders Verfahren des Machine Learning bzw. des Deep Learning. Diese Verfahren können auch komplexe Veränderungen des Systems erfassen.

Zur oben angewendeten Nomenklatur sei angemerkt, dass unter einer "Prüffahrt" die beschriebene Überwachung einer Maschinenachse während des regulären Bearbeitungsprozesses eines Werkstücks zu verstehen ist - wenngleich dies nur für Teilprozesse der Bearbeitung erfolgt, in denen das Werkzeug nicht ins Werkstück eingreift -, während eine "Referenzfahrt" ein separater Prüflauf der (kompletten) Maschinenachsen ist, der außerhalb des Bearbeitungsprozesses eines Werkstücks durchgeführt wird.

Eine Prüffahrt kann insbesondere bevorzugt während einer Abrichtphase erfolgen, in der das Werkzeug profiliert wird, und/oder während einer Phase, in der das Werkstück zur Bearbeitung in der Hartfeinbearbeitungsmaschine ausgerichtet wird, und/oder während einer Phase, in der ein Wuchtvorgang durchgeführt wird, und/oder in einer Phase, in der ein Be- oder Entladevorgang durchgeführt wird.

Gemäß dem vorgeschlagenen Konzept kann erreicht werden, dass der Zustand der Maschine und insbesondere der Maschinenkomponenten bereits während eines Bearbeitungszyklus eines Werkstücks erfasst und damit eine engmaschige und zeitneutrale Überwachung installiert werden kann. Die zeitaufwändigen und daher nur stichpunktartig durchgeführten Referenzfahrten müssen nicht mehr nur zyklisch gefahren werden, sondern können bedarfsbedingt durchgeführt werden.

Die Einbeziehung mindestens einer Beschleunigungsphase bzw. mindestens einer Abbremsphase in die Auswertung hat ergeben, dass eine viel bessere Beurteilung des Status der Maschine möglich ist, als dies bei der vorbekannten Auswertung bei konstanter Bewegung der Maschinenachse der Fall ist.

Die Überwachungsqualität steigt durch die zeitliche Engmaschigkeit und die Nebenzeiten können vorteilhaft reduziert werden. Das hat zur Folge, dass die Anzahl der nicht ordnungsgemäß bearbeiteten Werkstücke (bedingt durch verschlissene oder fehlerhafte Maschinenkomponenten) reduziert werden kann. Ferner wird die Fehlerursachenanalyse wesentlich erleichtert und bietet gute Voraussetzungen für eine vorsorgliche Maschinenwartung und Instandhaltung ("Predictive Maintenance"-Konzept).

Ein weiterer Vorteil ist, dass Ursachen insbesondere für plötzlich auftretenden Verschleiß (als Beispiel hierfür sei das Eindringen von Schmutz oder anderen abrasiven Medien in Lager oder Kugelgewindetriebe genannt oder auch ein Crash oder eine Überlast der Maschine) wesentlich leichter ermittelt und deutlich genauer zugeordnet werden können.

Vorteilhaft ist ferner, dass die Verfügbarkeit der Maschine für die effektive Bearbeitung des Werkstücks erhöht werden kann, da ohnehin verfügbare Nebenzeiten für Prüffahrten genutzt werden und somit bei der beschriebenen Vorgehensweise ungeplante Maschinenstillstände reduziert oder vermieden werden können.

Vorteilhaft ist schließlich, dass kritische Temperaturgänge der Maschine vermieden werden können.

In der Zeichnung ist ein Ausführungsbeispiel der Erfindung dargestellt.
- Fig. 1: zeigt den Verlauf einer Regeldifferenz über der Zeit bei der Beschleunigung einer Maschinenachse einer Verzahnungsschleifmaschine, wobei der Neuzustand (Kurve a), der beginnende Verschleiß (Kurve b) sowie der verschlissene Zustand (Kurve c) angegeben ist,
- Fig. 2: zeigt schematisch den Aufbau eines Autoencoders, der für die Auswertung eines erfassten Signals im Rahmen des "Machine-Learning"-Konzepts eingesetzt wird,
- Fig. 3: zeigt exemplarisch (oben) die Originaldaten-Eingabe in den Autoencoder, (in der Mitte) das encodierte Signal und (unten) das decodierte Signal, welches vom Autoencoder ermittelt wurde, und
- Fig. 4: zeigt schematisch die Zusammensetzung einzelner Betriebsphasen der Maschine zu Modellen, die analysiert werden können.

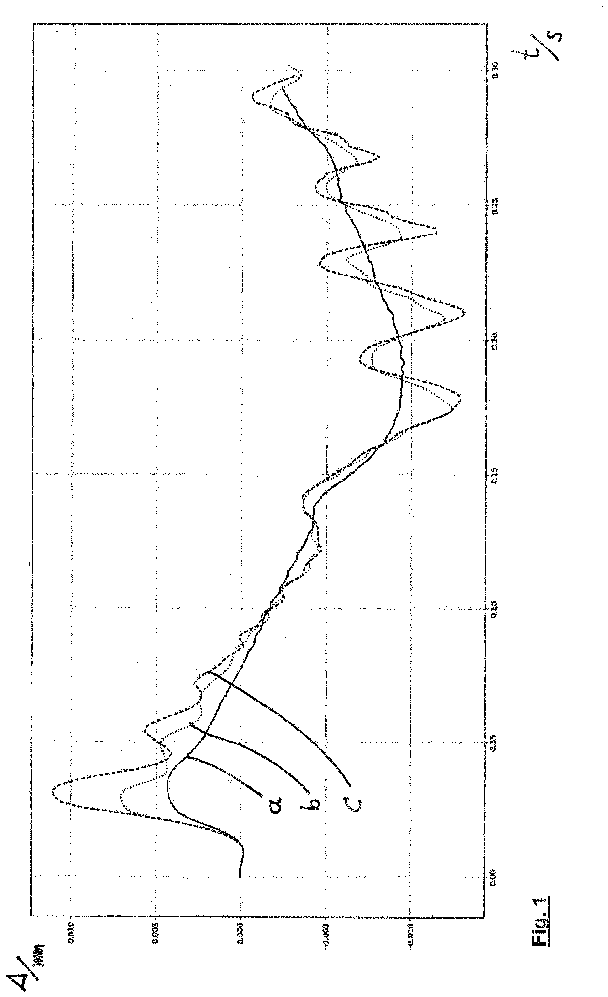

In Figur 1 ist über der Zeit die Regeldifferenz einer Maschinenachse einer Verzahnungsschleifmaschine dargestellt. Bei der Regeldifferenz handelt es sich um die Abweichung zwischen vorgegebener Bewegung und tatsächlich erreichter Bewegung der Maschinenachse. Mit fortschreitendem Verschleiß (und somit mit steigendem Spiel und zunehmender Schwergängigkeit) fällt es der Maschinenregelung immer schwerer, den erreichten Ist-Wert der Position möglichst nahe an den Soll-Wert der Position heranzuführen. Folglich kann die Regeldifferenz als Maß dafür herangezogen werden, wie der Verschleißzustand der Maschine bzw. derjenigen Komponenten ist, die die Bewegung der maßgeblichen Maschinenachse beeinflussen.

Dargestellt ist für einen Zeitraum von 0,3 s, in dem die Maschinenachse aus der Ruhe heraus mit einer vorgegebenen Beschleunigung beschleunigt wird, die sich ergebende Regeldifferenz (in mm).

Dabei stellt die Kurve a den Verlauf dar, der im Neuzustand erreicht wird. Beginnt allmählich der Verschleiß in der Maschine, ergibt sich die Kurve b. Bei verschlissenem Zustand liegt schließlich die Kurve c vor.

Wesentlich ist, dass eine besonders aussagekräftige Information über den Verschleißzustand der Achse erreicht werden kann, wenn nicht - wie bislang - lediglich eine Konstantfahrt (konstante Geschwindigkeit der Maschinenachse) gefahren wird, sondern wenn, wie dargestellt, der Maschinenachse eine vorgegebene Beschleunigung aufgegeben wird, die diese fahren soll.

Wie sich aus den in Figur 1 dargestellten Verläufen der Kurve der Regeldifferenz über der Zeit erkennen lässt, kann aufgrund des Kurvenverlaufs durchaus eine recht präzise Aussage über den Verschleißzustand der Maschine gemacht werden.

Die Auswertung der erfassten Kurve des Verlaufs der Regeldifferenz über der Zeit, d. h. der Vergleich mit früher aufgenommenen Verläufen der Kurve im Neuzustand der Maschine, alleinig durch statistische Methoden oder mittels Kennwertbildungen liefern mitunter kein hinreichend gutes Ergebnis.

Um die Veränderungen in der Beschleunigungsphase (wie in Figur 1 dargestellt) und/oder in einer Abbremsphase zu bewerten, werden vorteilhaft "Machine Learning"-Verfahren bzw. "Deep Learning"-Verfahren eingesetzt.

Eine bevorzugte Verwendung ist hierbei der Einsatz eines Autoencoders. Dieser besteht aus mehreren speziell angeordneten Schichten (Layer) eines neuronalen Netzes mit dem Ziel, effiziente Codierungen zu lernen, was zur Erkennung von Anomalien genutzt werden kann. Das neuronale Netz wird beispielsweise mit Daten aus Referenzfahrten trainiert, welche eindeutig als "ordnungsgemäß" qualifiziert wurden. Werden dann Daten einer Referenzfahrt mit unbekanntem Zustand (während der Lebensdauer der Maschine bzw. der Achse) auf den Eingang des Autoencoders gegeben, versucht dieser, das Signal anhand seines vorher trainierten Zustands bzw. anhand der erlernten Codierung zu rekonstruieren. Zwischen dem Eingangs- und Ausgangssignal werden Fehlerwerte (wie beispielsweise "Mean Absolute Error", "Mean Squared Error") berechnet. Beim Überschreiten bestimmter Schwellwerte dieser berechneten Kenngrößen wird ein Hinweis zum Zustand der Achse ausgegeben, der darauf hinweist, dass ein kritischer Verschleißzustand erreicht ist. Ferner ermöglicht es dieses Vorgehen, dass auch Hinweise ausgegeben werden können, falls eine trendmäßige Veränderung des Maschinenzustands festgestellt wird. Zeigen beispielsweise mehrere Prüfungen innerhalb eines bestimmten zeitlichen Intervalls eine Erhöhung definierter Messwerte, kann dies ein Hinweis auf sich anbahnenden Verschleiß sein, was durch das System signalisiert werden kann.

Die Referenzsignale können bzw. müssen dabei für verschiedene Maschinenbaureihen getrennt voneinander betrachtet werden. Basis für alle Algorithmen ist ein ausreichend großer Datensatz, der eine ausreichende Aussagekraft hat. Diese Datensätze beruhen auf einer Vielzahl von Messreihen bei Maschinen im Feld, im hauseigenen Betrieb und im Betrieb an speziell aufgebauten Prüfständen.

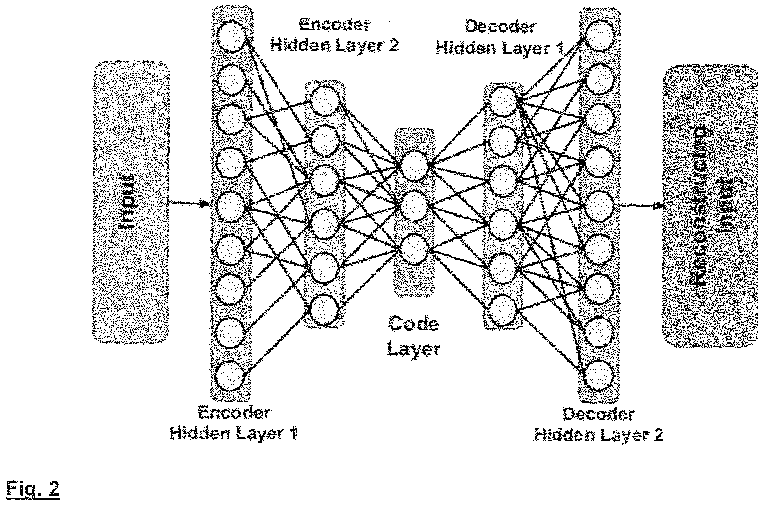

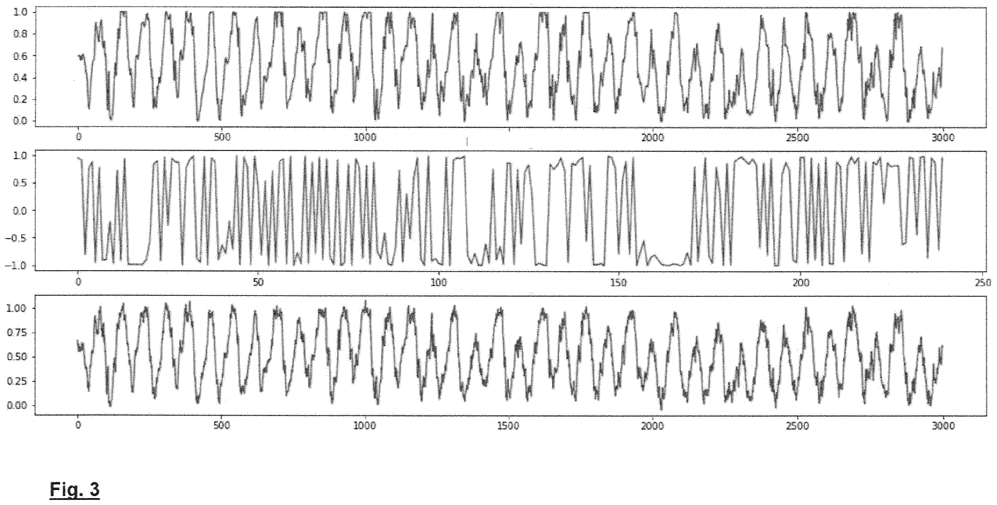

Somit kommen bevorzugt Auswertungen mittels Künstlicher Intelligenz zum Einsatz, wie es in den Figuren 2 und 3 beispielhaft angedeutet ist.

In Figur 2 ist der prinzipielle Aufbau eines Autoencoders dargestellt. Hier ist schematisch zu sehen, wie ein Autoencoder arbeitet, um ausgehend von eingegebenen Werten ("Input") eine rekonstruierte Eingabe ("Reconstructed Input") zu erhalten, welche eine Aussage darüber zulässt, wie stark sich die eingegebenen Werte im Verhältnis zu vorgegebenen Werten verändert haben, um auf eine relevante Abweichung schließen zu können.

Die Anzahl der Neuronen (das sind die kreisförmig dargestellten Symbole in Figur 2) werden über eine "Encoder Hidden Layer 1" und eine "Encoder Hidden Layer 2" zyklisch kleiner bis zum "Code Layer". Dort kann das codierte Signal (Encoded Signal) abgegriffen werden. Vom "Code Layer" bis zur Ausgangsschicht ("Reconstructed Input") wird die Anzahl der Neuronen von der "Decoder Hidden Layer 1" über die "Decoder Hidden Layer 2" wieder zyklisch vergrößert.

In Figur 3 ist dies exemplarisch für einen konkreten Anwendungsfall illustriert. Die Figur zeigt beispielhafte Signale an den verschiedenen Schichten ("Layer"). Das Eingangssignal (obere Darstellung in Figur 3: Originaldaten-Eingabe) wird durch die "Encoder Hidden Layer" des neuronalen Netzes in der Anzahl der Samples immer weiter reduziert, bis das encodierte Signal ("Code Layer") erreicht ist (s. mittlere Darstellung in Figur 3: Encoded Signal). Anschließend wird durch die "Decoded Hidden Layer" das Signal wieder auf die ursprüngliche Anzahl der Samples zurückgerechnet ("upsampled"; untere Darstellung in Figur 3: Decoded Signal).

Im optimalen Fall kann der Autoencoder das Signal fehlerfrei rekonstruieren. Werden Signale in den Autoencoder gegeben, die von der Form der angelernten Signale abweichen, kann der Autoencoder das Signal nicht fehlerfrei rekonstruieren. Die berechneten Fehlerwerte werden größer, wenn die Abweichung (infolge Verschleißes) vom Eingangssignal größer wird.

Das System kann somit dann auf erfolgten Verschleiß in der Maschine bzw. der Maschinenachse schließen und einen entsprechenden Hinweis an den Maschinenbediener ausgeben.

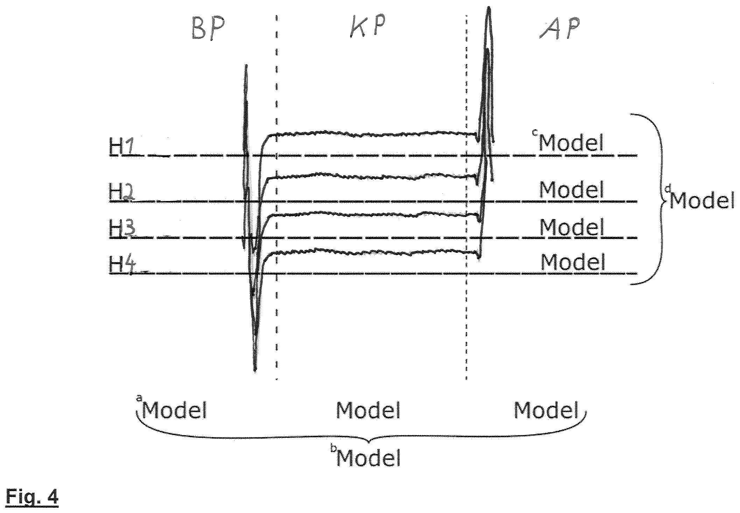

In Figur 4 ist schematisch angedeutet, wie Modelle gebildet werden können, welche dann der oben beschriebenen Auswertung zu Grunde gelegt werden. Dargestellt sind für eine Achse der Maschine mehrere Mess-Hübe (H1, H2, H3, H4), welche jeweils eine Beschleunigungsphase BP, eine Phase der Konstantfahrt KP sowie eine Abbremsphase AP haben. Für die Modellbildung können unterschiedliche Kombinationen der Bestandteile der Bearbeitung herangezogen werden.

Gemäß einem "Model a" wird jeweils die Beschleunigungsphase BP, die Konstantphase KP und die Abbremsphase AP betrachtet und zwecks Modellbildung die jeweiligen Phasen der vier Hübe zusammengefasst oder jede Phase einzeln zu je einem Modell herangezogen.

Gemäß einem "Model b" werden die drei Phasen BP, KP und AP zu einem Modell zusammengefasst.

Gemäß einem "Model c" werden die drei Phasen BP, KP und AP zusammengefasst, jedoch für jeden Hub separat betrachtet.

Gemäß einem "Model d" werden die Daten für das "Model c" für alle Hübe zusammengefasst (ein Modell für die gesamte Referenzfahrt).

Natürlich sind auch andere Modelle bzw. Arten von neuronalen Netzen einsetzbar, um die beschriebene Überwachung vorzunehmen.

Durch die beschriebene Vorgehensweise können wesentliche Informationen zum Maschinenzustand ermittelt werden, so dass sehr schnell und zuverlässig Abweichungen festgestellt und gegebenenfalls entsprechende Maßnahmen eingeleitet werden können; so kann verhindert werden, dass Werkstücke produziert werden, die Ausschuss sind.

Weiterhin kann ein engmaschiges Konzept für eine vorsorgliche Maschinenwartung ("Predictive Maintenance") installiert werden.

Dies ist besonders vorteilhaft bei plötzlich auftretendem Verschleiß, so dass zeitnah erkannt werden kann, dass beispielsweise ein Austausch von Maschinenkomponenten erforderlich ist. Gegebenenfalls kann über die Extrapolation der Kenngrößen hier eine Vorhersage für den optimalen Zeitpunkt einer Maßnahme festgelegt werden.

In Phasen der Bearbeitung des Werkstücks, bei denen das Werkzeug nicht ins Werkstück eingreift, insbesondere also beim Abrichten des Werkzeugs, dem Wuchten, dem Schwenken eines Rundtisches oder weiteren Maschinenbewegungen, die für den Bearbeitungszyklus nötig sind, werden Daten der einzelnen Achsen aufgenommen.

Bei diesen Leerhüben (d. h. bei Maschinenbewegungen, bei denen das Werkzeug nicht ins Werkstück eingreift) kann es sich insbesondere handeln um einen Leerhub beim Schlichtabrichten (Y-Achse) oder Schruppabrichten, um die Zustellung beim Abrichten und Schleifen (X-Achse), um einen Leerhub beim Schleifen (Z-Achse) oder um das Anfahren der Grundposition für das Wuchten oder Schleudern. Gut geeignet sind auch jene Phasen des Bearbeitungsvorgangs, bei dem ein Wuchten, ein Schleudern, ein Ausrichten des Werkstücks, ein Schwenken eines Turms (eines Rundtisches) für das Abrichten und ein Werkstückwechseln erfolgt.

Bei den aufgenommenen Messsignalen kann es sich insbesondere um Signale eines Beschleunigungsaufnehmers handeln, der auf einer Komponente der Maschine angeordnet ist, um steuerungsinterne Signale (wie beispielsweise Ströme oder Regeldifferenzen) sowie um weitere Signale gegebenenfalls aus bereits vorhandener Sensorik (beispielsweise von einer Strommesszange und einem Geber).

Die Verarbeitung der Signale findet bevorzugt auf einem Industrie-PC statt.

Die Signalverläufe, Auswertungen und Analysen können in einer Datenbank lokal auf dem PC gespeichert werden. Weiterhin besteht die Möglichkeit, die Daten cloudbasiert abzulegen und auszuwerten.

Das vorgeschlagene Konzept kann baugruppen-, maschinen- oder bauteilspezifisch oder aber auch maschinenübergreifend eingesetzt werden. Auch ein Ansatz über verschiedene Maschinentypen ist denkbar. Bei allen Anpassungen des Konzepts ist immer eine ausreichende und hinreichend große Datenbasis notwendig.

## Patentansprüche

1. Verfahren zum Überwachen des Zustands einer Hartfeinbearbeitungsmaschine, insbesondere einer Schleifmaschine, wobei die Hartfeinbearbeitungsmaschine eine Anzahl an NC-gesteuerten Achsen aufweist, die bei der Bearbeitung eines Werkstücks betätigt werden, wobei für die Beurteilung des Zustands der Hartfeinbearbeitungsmaschine mindestens eine Referenzfahrt an mindestens einer Achse durchgeführt wird, bei der eine Reaktion der Achse auf ein Antriebssignal gemessen und bewertet wird,
**dadurch gekennzeichnet,**
**dass** die Referenzfahrt eine Phase umfasst, in der die Achse beschleunigt und/oder abgebremst wird, wobei zur Beurteilung des Verschleißzustands der Hartfeinbearbeitungsmaschine die Reaktion der Achse auf das Antriebssignal gemessen und die gemessene Reaktion mit erwarteten Signalverläufen verglichen wird, die bei ordnungsgemäßem Zustand der Achse vorlagen, wobei aus dem Vergleich eine Aussage abgeleitet wird, ob ein ordnungsgemäßer Zustand der Achse vorliegt.

2. Verfahren nach Anspruch 1, **dadurch gekennzeichnet, dass** der Vergleich unter Nutzung eines Machine-Learning-Konzepts oder eines Deep-Learning-Konzepts erfolgt.

3. Verfahren nach Anspruch 2, **dadurch gekennzeichnet, dass** das Machine-Learning-Konzept oder das Deep-Learning-Konzept unter Verwendung mindestens eines Autoencoders eingesetzt werden.

4. Verfahren nach einem der Ansprüche 1 bis 3, **dadurch gekennzeichnet, dass** die gemessene und bewertete Reaktion der Achse auf das Antriebssignal eine Regeldifferenz der NC-Achse ist, die bei der Regelung der Maschinenachse auftritt, oder eine Beschleunigung ist, die ein Beschleunigungsaufnehmer erfasst, und/oder ein Strom ist, mit dem eine Maschinenachse angetrieben wird.

5. Verfahren nach einem der Ansprüche 1 bis 4, **dadurch gekennzeichnet, dass** die Referenzfahrt erfolgt, wenn kein Eingriff des Werkzeugs der Hartfeinbearbeitungsmaschine mit dem Werkstück vorliegt.

6. Verfahren nach einem der Ansprüche 1 bis 5, **dadurch gekennzeichnet, dass** die Referenzfahrt neben mindestens einer Beschleunigungsphase und/oder Abbremsphase auch eine Phase konstanter Geschwindigkeit der Achse umfasst.

7. Verfahren nach einem der Ansprüche 1 bis 6, **dadurch gekennzeichnet, dass** die Referenzfahrt als Prüffahrt durchgeführt wird, die im Zeitraum einer Bearbeitungsphase des Werkstücks erfolgt, die mit der Einbringung des Werkstücks in die Hartfeinbearbeitungsmaschine beginnt und mit der Abfuhr des bearbeiteten Werkstücks aus der Hartfeinbearbeitungsmaschine endet.

8. Verfahren nach Anspruch 7, **dadurch gekennzeichnet, dass** die Prüffahrt erfolgt, wenn kein Eingriff des Werkzeugs der Hartfeinbearbeitungsmaschine mit dem Werkstück vorliegt.

9. Verfahren nach Anspruch 8, **dadurch gekennzeichnet, dass** die Prüffahrt während eines Leerhubs stattfindet, in der das Werkzeug relativ zum Werkstück verfahren wird, ohne dass es zum Eingriff des Werkzeugs in das Werkstück kommt.

10. Verfahren nach einem der Ansprüche 1 bis 9, **dadurch gekennzeichnet, dass** beim Vergleich der gemessenen Reaktion der Achse auf das Antriebssignal mit vorher bestimmten Reaktionen beurteilt wird, ob das Verlassen eines zulässigen Toleranzbandes zu erwarten ist.

11. Verfahren nach einem der Ansprüche 1 bis 10, **dadurch gekennzeichnet, dass** es bei einer Verzahnungsschleifmaschine eingesetzt wird.
